# EUROPEAN PATENT SPECIFICATION

(11) **EP 2 012 502 B1**
(45) Date of publication and mention of the grant of the patent: **19.09.2018**
(21) Application number: 06840694.1
(22) Date of filing: 29.12.2006
(51) Int. Cl.: H04L 29/12, H04L 12/24

(54) **METHOD FOR MANAGING USER SIDE DEVICE THROUGH NAT GATEWAY**
VERFAHREN ZUR VERWALTUNG EINES BENUTZERSEITIGEN GERÄTS DURCH EIN NAT-GATEWAY
PROCÉDÉ DE GESTION D'UN DISPOSITIF CÔTÉ UTILISATEUR PAR L'INTERMÉDIAIRE D'UNE PASSERELLE NAT

(30) Priority: 27.04.2006 CN 200610011805
(43) Date of publication of application: 07.01.2009
(73) Proprietor: ZTE Corporation, Shenzhen, Guangdong 518057 (CN)
(72) Inventor: GENG, Guoqing, Shenzhen, Guangdong 518057 (CN); ZHANG, Yuan, Shenzhen, Guangdong 518057 (CN); ZHANG, Gongying, Shenzhen, Guangdong 518057 (CN)
(74) Representative: Ilgart, Jean-Christophe
(86) International application number: PCT/CN2006/003664
(87) International publication number: WO 2007/124632

(56) References cited:
- CN-A- 1 561 061
- CN-A- 1 744 521
- KR-A- 20060 028 975
- US-A1- 2003 055 947
- US-A1- 2005 105 508
- US-A1- 2006 077 988

## Description

### Technical field

The present invention relates to through technology of network address translation protocol, and more particularly, relates to method for initiatively managing the user side device in the local area network through NAT protocol.

### Background Art

The English abbreviations mentioned in the present invention are listed as follow:
ACS: Auto-Configuration Server;
CPE: Customer Premise Equipment;
UDP: User Datagram Protocol;
TCP: Transmission Control Protocol;
LAN: Local Area Network;
WAN: Wide Area Network;
ICMP: Internet Control Message Protocol;
NAT: Network Address Translation;
TR-069: Technical Report - 069 CPE WAN Management Protocol;
SNMP: Simple Network Management Protocol;
CPE is a terminal equipment located at subscriber's houses or enterprise's interior, such as the ADSL MODEM, the set-top box and IAD (integrated access device), which is provided by telecommunication company and connected with telecommunication network through reticle or telephone line. With the ceaseless upgrade and development of telecommunication network and IP technology in recent years, applications of video service and stream media technology are continuously updated, terminal equipment of the user side is becoming more various, and has more powerful function, more intelligent level. At the starting stage of internet, a personal user or a corporation could only access to network by connecting with MODEM, through which family users could enjoy various information and resources from the internet. With improvement of science and technology, terminals using various new technologies are going into thousands of families in succession too, and these terminals are accepted and used by more and more people, such as AP (access point) device using wireless broadband access technology, IAD device and IP PHONE device which use VoIP technology, set-top boxes device using broadband IP technology and stream media technology, and wireless Bluetooth access device. However, as the number of communication terminals of the user side is increasing, the communication terminals have brought management problems along with convenience to users and huge income for operators. For the users, more intelligent and simplified electronic devices with more powerful functions which require no or few configuration and maintenance, are expected. And the devices which is self-management and zero maintenance are most expected. In the other hand, operators want to enhance the capability and strength of management for the CPE devices, improve quality of service and reaction capability to fault of the users as well as monitoring and tracing malicious user behaviors.

With the network scale enlarging and the access number of device increasing, the available IP address resources of telecommunication operators will be exhausted and the available IP addresses that provided by telecommunication operators to family users and corporate users are becoming less and less. At present, the operator can provide only one legal address to one common family user. The user side addresses of so many network terminal devices can only be translated by means of NAT to achieve that plural user devices share one external address. NAT, i.e. Network Address Translation, is a standard and criterion (RFC 1631) instituted by Internet Engineering Task Force. NAT means that using internal address in the internal network of local area network. When LAN side device of NAT communicates with external network, the LAN side address is replaced by WAN (Wide Area Network, e.g. Internet) side address at the gateway (which can be considered as a unified exit of the network) to enable the normal access on the WAN side. The NAT could make plurality of computers and terminal devices can sharing one link, which well solves the problem of lacking user IP address. At this time, NAT shields the internal network and all internal network devices are invisible for the external network, however, computer users of the internal network are usually unaware of the existence of the NAT.

At present, there are three types of NAT: Static NAT, dynamic address NAT (Pooled NAT) and network address port translation NAPT (Port-Level NAT).

The Static NAT is the simplest to set and easiest to implement, wherein each host in the internal network is permanently mapped to be a certain legal address in the external network. While in dynamic address NAT, a series of legal addresses are defined in the external network and mapped to the internal network by means of dynamic assignment. In NAPT, the internal addresses are mapped to different ports of one IP address in the external network. Each of the three types of NAT has its own strong and weak point depending on different requirements.

In dynamic address NAT, only IP address is translated and a temporary external IP address is assigned to each internal IP address. Dynamic address NAT is mainly used for dialing and can also be used in frequent remote connection, wherein when a remote user is connected, an IP address will be assigned to the user and when the user is disconnected, the IP address will be released for later use.

Network Address Port Translation is a translation method that commonly used in families and corporations, by which middle and small networks can be hidden behind a legal IP address. The difference between the NAPT and the dynamic address NAT is, with the NAPT, the internal link are mapped to a separate IP address in the external network and the IP address is added with a port number selected by the NAT device.

Because the NAT can shield topology information of the internal network, so it functions as a firewall, wherein devices of the external network can not access the NAT internal network freely. Additionally, the management data can not pass through it, so that the telecommunication operators can not manage the telecommunication devices of the user side directly. The corresponding management can only be performed when the CPE device initiatively transmits a connection to obtain the mapping address and relations about the mapped address are established in the NAT. In this case, the management terminal can not perform effective real time management to CPE, and the management terminal can not provide considerate services to users in real time, and it can not respond and solve the failure and warning of CPE in real time. With the user group enlarging, the problem of NAT through will become more and more common and intractable.

At present, there is a method of double-way access by means of NAT, which can be achieved by using long connection (i.e. a communication connection is set up between two parties firstly, and then keep the connection, and send and receive messages). As the terminal located inside the NAT can access the terminal located outside the NAT freely, so the terminal located inside the NAT transmits a call to the terminal located outside the NAT to make connection setting up request, firstly. After the establishment of the connection, one terminal of the two parties in the session sends data packet to the other party in a certain cycle to keep the long connection between the two parties, wherein the cycle is a time interval smaller than the invalid cycle of the local NAT.

The shortcomings in the above method are listed as follow:
1) As this access method is based on TCP long connection, messages have to be sent periodically between the two parties connected with each other to keep the TCP connection. Because of the huge number of user terminals, the server needs to occupy large amount of resources and link bandwidth, which leads to low processing ability and unsatisfactory management effect.
2) This method fails to provide how to obtain the NAT invalid cycle (i.e. NAT address mapping ageing time). For different NATs, the ageing times are different and can not be processed uniformly, which makes the management more difficult.
3) This method can not be matched with the standard management protocols of CPE devices (TR-069, SNMP).

Above all, this method is not adapted for CPE devices through NAT with a large number of management.

In the DSL (digital subscriber line) forums, a technical report the TR-111 is brought forward to carry out TR-069 remote management through NAT, wherein the TR-069 is used to perform remote management to family network devices. In the TR-111, using the present STUN (Simple Traversal of User Datagram Protocol (UDP) Through Network Address Translators) mechanism in combination with the management characteristics of TR-069, the CPE keep the mapping relations of NAT by discovering the ageing time of the NAT and by continuously sending UDP binding messages. ACS can inform the CPE to enter the initiative management process by means of UDP-based link request message.

The shortcomings in the above method are listed as follow:
1) The CPE and the management terminal have to do a lot of work to realize this function, which leads to the complexity of carrying out this method.
2) It will take two temporary NAT address translation items to discover the ageing time of the NAT, and the items in the NAT are limited. For large internal network environments (e.g. hotel), as the address mapping entries of NAT itself are insufficient, this mechanism can not be carried out.
3) It is specially designed for TR-069 management protocol, this method is not adapted for the devices managed by SNMP protocol.

There are also other methods for through NAT, but in those methods, proxy servers or relay servers need to be added or NAT configuration or reservation port need to be changed. Those methods change a lot to the present network and configuration, and are not suitable for the management thought and mode of operators.

A first prior art document, US 2005/105508A1, discloses a system for management of internet telephony equipment deployed behing firewalls, and a second prior art document, US 2006/077988A1, discloses a system for management of equipment deployed behind firewalls.

### Summary of the Invention

The technical problem to be solved in the present invention is to provide a method for managing user side device through NAT gateway in order to solve the technical problems that the NAT through technology is complicatedly to realize, not adaptable in large internal network environments and can not be managed by various protocols.

To achieve the above object, the present invention provides a method according to claim 1. Optional features of the invention are claimed in dependent claims 2-10.

The present invention has the following technical effects:
The method of the present invention makes use of the technical characteristics that the management protocols is supported by the present CPE devices, employs the Inform method of the TR-069 and the SNMP management protocol method so that the management terminal can initiatively manages the CPE devices in real time or in quasi real time, such as fault detecting, performance monitoring and state querying. By this method, the real time management of the management terminal is ensured and the management period is shortened. Meanwhile, the method can transparently get through various types of the existing NAT gateways and any changes to the existing NAT configurations is unnecessary, which ensures the security and integrity of the user side existing devices and device configurations. The method of the present invention is adaptable for any associated technologies of the SNMP protocol or the TR-069 protocol and can manage almost all the existing CPE devices with a uniform process and message without appointing the protocol type of the CPE.

### Brief Description of the Accompanying Drawings

Figure 1 is a schematic flow chart showing the discovery of NAT ageing time according to the embodiments of the present invention.
Figure 2 is a schematic flow chart showing that CPE sends the UDP heartbeat message, the management terminal gives a response and performs management according to the embodiments of the present invention.
Figure 3 shows the flow that the management terminal initiatively sends the UDP management request message and enters the management process of the TR-069 or the SNMP according to the embodiments of the present invention.
Figure 4 is a flow chart showing the steps of the method of the present invention.

### Embodiments for Carrying Out the Present Invention

The method of the present invention will be described as follows in combination with the accompanying drawings.

The present invention overcomes the difficulties of the management terminal to manage the CPE through the NAT, provides a method for managing CPE devices through NAT by using simplified NAT ageing time discovery mechanism to discover the ageing cycle of the NAT address mapping. CPE may send the UDP heartbeat message according to the NAT ageing period or the time interval set by the management terminal. The management terminal can gives a response according to the UDP message to inform whether the CPE needs sending the Inform message of the TR-069 or sending the SNMP Trap message. The management also can send the UDP management request message directly without waiting for the UDP heartbeat message from the CPE. The same processing will be performed when the CPE receives the request message.

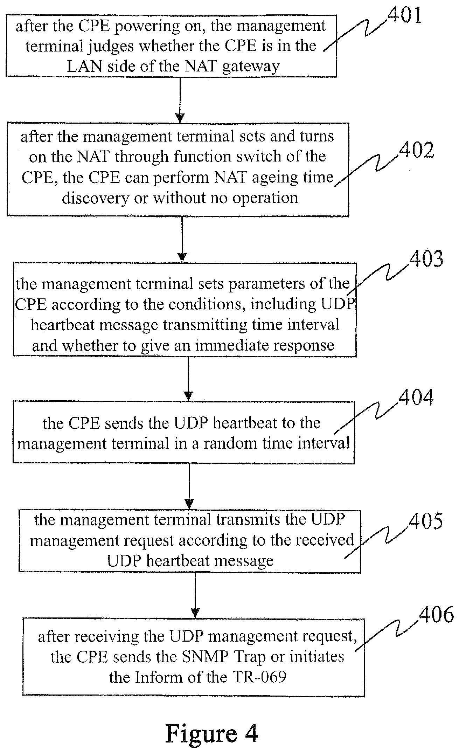

Figure 4 is a flow chart showing the steps of the method of the present invention. The method of the present invention comprises the following steps: Step 401, when the CPE powering on, the management terminal judges whether the CPE is in the LAN side of the NAT gateway.
Step 402, the management terminal sets and turns on the NAT gateway through function switch of the CPE, the CPE may operate NAT ageing time discovery or perform no operation.
Step 403, the management terminal sets parameters of the CPE according to the situation, the parameters include the time interval of sending the UDP heartbeat message and whether to respond immediately or not.
Step 404, the CPE sends the UDP heartbeat to the management terminal at a random time interval.
Step 405, the management terminal sends the UDP management request according to the received UDP heartbeat.
Step 406, after receiving the UDP management request, the CPE sends the SNMP Trap or transmits the Inform of the TR-069.

In the step 401, the management terminal judges whether the CPE is in the LAN side of the NAT by comparing the address reported when the CPE powering on and the message address that is actually received.

In the step 401, if it is discovered that the CPE is in the LAN side of the NAT, then turn on the NAT through switch.

In the step 401, the CPE may activate the NAT ageing time discovery function and record the discovered NAT ageing time after the NAT through function switch is turned on. CPE can also perform no operation.

In the step 402, if the NAT ageing time discovery is activated, the CPE sends the NAT ageing time message of UDP to the management terminal through port P1. Turn on the P1 port to monitor the response sent by the management terminal. Meanwhile turn on the timer and record the present time to be T1. At this time, the address at where the CPE sends the message is (A1, P1), and the address is translated to be (A1', P1') by NAT.

In the step 402, after receiving the NAT ageing time discovery message from the CPE, the management terminal sends the UDP-based detecting message to (A1', P1') in a certain time interval.

In the step 402, if the CPE has not received the detecting message of the management terminal for a long time (e.g. 5 minutes), it is considered that the NAT address mapping relation has been aged and takes the difference (T2-T1) between the time T2 when the latest message is received and T1 as the NAT ageing time.

In the step 402, when discovering NAT ageing or being unable to discover the ageing time, the CPE will send the UDP-based NAT ageing discovery ending message to the management terminal. After receiving the message, the management terminal stops sending the detecting message.

In the step 402, because of the unreliability of the UDP protocol, the management terminal may fail to receive the NAT ageing time discovery ending message, however, it will automatically stop sending the detecting message after continuously sending the response for 30 minutes.

In the step 402, after completing the NAT ageing discovery process, the CPE sets associated parameters for the management terminal to read. The parameters comprise: a NAT ageing time discovery identify and the NAT ageing time (if the NAT ageing time has been discovered).

In the step 403, the management terminal queries whether the CPE has discovered the NAT ageing time or not and sets the time interval of sending the UDP heartbeat of the CPE according to the NAT ageing time discovery result. If the ageing time is discovered, the biggest time interval is the NAT ageing time. If the CPE fails to discover the NAT ageing time, the time interval is a default time period.

In the step 403, the management terminal sets the parameter whether to give an immediate response. If the parameter is true, the management terminal will give a response indicating whether CPE needs to send the SNMP Trap or perform the Inform immediately as soon as it receives the UDP heartbeat message of CPE. Otherwise, the management terminal will only sends the response message when there is a need to manage the CPE.

In the step 404, the CPE gets a random number within the scope of the set time interval and uses address (A1, P1) to send the UDP heartbeat message.

In the step 404, if the immediate response parameter is set to be true in the step 402, the management terminal will send a response after receiving the UDP heartbeat from the CPE, otherwise no operation will be performed.

In the step 404, if the management terminal sets the immediate response parameter to be true in the step 402, after the UDP heartbeat is sent, the CPE will wait for the response of the management terminal. In the case of overtime, the sending will be repeated three times. If the response of the management terminal is received in any of the three times, the resending will be stopped,.

In the step 405, the management terminal may send the UDP management request message after the UDP heartbeat or at any time when the management is required.

In the step 406, after receiving the request message from the management terminal, the CPE will transmits the TCP-based Inform or the SNMP Trap. When entering the management process, the CPE stops sending the UDP heartbeat and sends the UDP heartbeat as soon as the process is completed.

In the step 406, after receiving the request message from the management terminal, the CPE can send the SNMP Trap. After the SNMP Trap is received, the management terminal sends the SNMP management message (e.g. SNMP GET/SET). As the destination address/destination port of the message is the source address/source port where the SNMP Trap is received, the message will be forwarded to the CPE device through the NAT.

After the CPE communicates with the management terminal, the corresponding mapping relation item between the address in LAN side and that in WAN side will be created in the NAT. After the invalidation of the mapping relation, the message sent from the management terminal to the CPE will be blocked by the NAT and not be forwarded to the corresponding CPE. The existence of the NAT ageing time brings difficulties when the management terminal initiatively manages CPE devices. However, the NAT ageing time can be discovered based on this principle, which helps to get through the NAT.

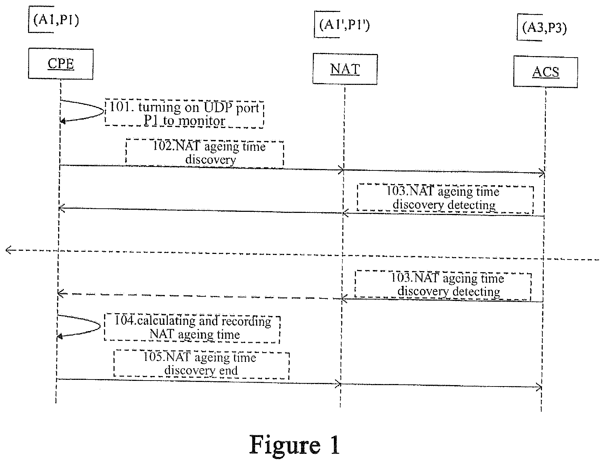

As shown in figure 1, the process of NAT ageing time discovery in the present invention comprises the following steps, wherein A1, A1' and A3 are IP addresses; P1, P1' and P3 are ports:
Step 101, the CPE turns on UDP port P1 to perform monitoring.
Step 102, the CPE sends NAT ageing actual discovery message to the management terminal (A3, P3) from (A1, P1), and records the present time to be T1 and begins clocking.
Step 103, after receiving the CPE message, the management terminal periodically sends the NAT ageing time detecting message of UDP to the source address at where the message is received.
Step 104, after receiving the previous detecting message, if no message is received in the following five minutes, the CPE considers that NAT address mapping entry has aged and then calculates the NAT ageing time.
Step 105, the CPE sends the NAT ageing time discovery ending message of the UDP to the management terminal from (A1, P1).

In the step 102, the address where the CPE sends the message is mapped to be (A1', P1') by the NAT, i.e. the address where the management terminal receives the message.

In the step 102, if CPE has not received response of the management terminal for a long time after the message is sent, the connectivity of the management terminal link is checked by means of PING etc. If the link is not connected, the CPE exits the process, otherwise resends the NAT discovery message for three times. If the message has not been received yet, CPE exits the process.

In the step 103, after receiving the message, the management terminal sends the NAT ageing time detecting message per 10 seconds.

In the step 104, if the response message sent by the management terminal is not received for 5 minutes, the CPE takes the difference (T2-T1) between the time T2 when the latest response is received and T1 as the NAT ageing time.

In the step 104, after discovering the NAT ageing time, the CPE records the NAT ageing time discovery identify and the concrete time. The management terminal may query the corresponding parameters.

In the step 105, the management terminal stops sending the response message when the ending message of CPE is received. If the UDP message is lost and not received by the management terminal, the management terminal automatically stops sending after continuous sending for 30 minutes.

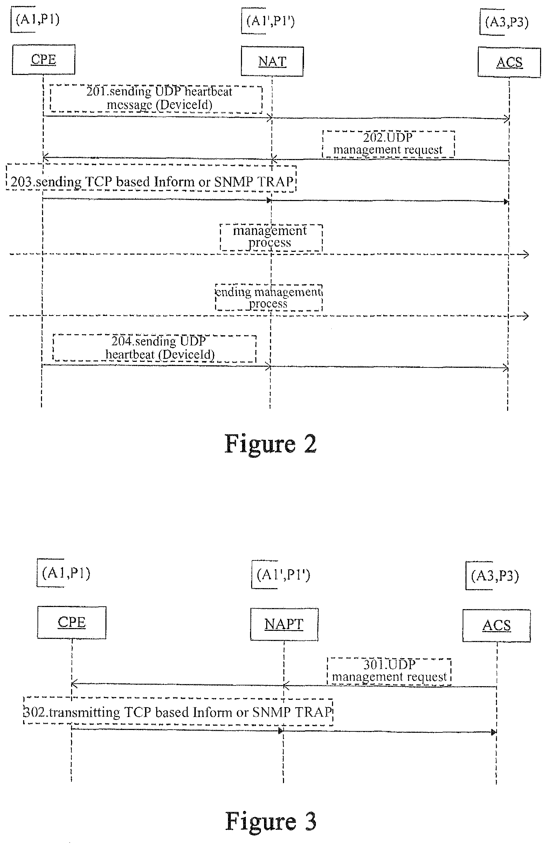

As shown in figure 2, the processes that CPE sends the UDP heartbeat and that the management terminal gives response comprise the following steps: Step 201, the CPE sends the UDP heartbeat message to the management terminal (A3, P3) from (A1, P1).
Step 202, after receiving the message, the management terminal sends the UDP management request message.
Step 203, after receiving the response of the management terminal, the CPE transmits Inform of the TR-069 or sends the SNMP Trap according to the type of the corresponding message, and then enters the corresponding management operation process.
Step 204, the CPE sends the UDP heartbeat message as soon as the management process ends, and then the process of sending the UDP heartbeat goes into dormancy. After the dormancy, the CPE prepares for the next sending of the UDP heartbeat message.

In the step 201, because of the NAT address translation, device ID (DeviceId) parameters should be included in the UDP heartbeat message sent by the CPE, otherwise the management terminal will fail to associate the message with the corresponding CPE device.

In the step 201, if the management terminal has set that the CPE needs waiting for the response of the management terminal, each time after the CPE sends a heartbeat, the management terminal will give a response. Each time after sending the UDP heartbeat message, the CPE needs waiting for the response. In the condition of overtime, CPE does not receive a response, it will resend the message for three times. The CPE will exit the process if no response is received in the three times resending.

In the step 201, if the management terminal has set that the CPE does not need waiting for the response of the management terminal, each time after the CPE sends heartbeat, the management terminal will only send the UDP management request message when needing managing the CPE. At this time, CPE will neither wait for a response nor try again.

In the step 202, if setting that the CPE needs waiting for a response, the management terminal will give a response indicating whether to immediately manage the CPE to each received message.

In the step 202, if it is set that there is no need for the CPE to wait for a response, the management terminal will send the UDP management request message when there is a need to manage the CPE.

In the step 203, when entering the management process of the management terminal, the CPE will not send the UDP heartbeat message any more.

In the step 203, if the CPE sends SNMP Trap and the management terminal sends the SNMP management message, the destination address/destination port of the message is same with the source address/source port where the SNMP Trap is received.

In the step 204, because of the number of the CPEs managed by the management terminal may be large, in order to avoid plentiful intercurrent situations occurring when a large number of CPEs send the UDP heartbeat simultaneously, the CPEs chooses to go to random dormancy for a corresponding time in a time period.

For the CPE devices that could be managed by the management terminal, the management terminal can send the UDP request message to instruct the CPE to perform Informing or send the SNMP Trap when an immediate management is needed. As the NAT address mapping relation has aged, the message can also be blocked by the NAT. The management terminal can retry for three times. If no response of the CPE is received in the three times, the NAT address mapping is considered to be aged. The UDP management request message can be sent by a response when the UDP heartbeat is received.

As shown in figure 3, the processes that the management terminal sends the UDP management request message and the CPE gives a response comprise the following steps and technical links:
Step 301, the management terminal sends the UDP management request message to (A1', P1') from (A3, P3).
Step 302, after receiving the message from (A1, P1), the CPE transmits the TCP-based Inform or the SNMP Trap and enters the management process.

In the step 301, (A1', P1') is the address where the management terminal receives the message, and the address which is translated by NAT from the address (A1, P1) where CPE sends the UDP heartbeat.

In the step 301, there may be the following two situations after the UDP management request message is sent by the management terminal:
1) In the case of overtime, if no response is received, the message will be resent for three times and no response is received in the three times.
2) If ICMP port unreachable message from the WAN side address of the NAT gateway is received.

The presence of the above two situations means that the NAT address item has been aged, the management terminal needs to wait for the UDP heart sent by the CPE and sends the management request through the UDP heartbeat response message.

In the step 302, if the address mapping item in NAT still exists, NAT will forward the message received from (A1', P1') to (A1, P1).

The main principle of the embodiments of the present invention is: when the NAT address mapping relation has aged and becomes invalid, the request message from the external address will be blocked by the NAT and the corresponding message can not be received by the device with the internal network address. The CPE powers on and communicates with the management terminal. The management terminal judges that whether the CPE is located in LAN side of the NAT and turns on the NAT through switch. After the NAT discovery switch is turned on, the NAT ageing time operation or no operation can be performed by the CPE . The CPE sends NAT ageing time discovery message to the management terminal. After the the message is received by the management terminal, the detecting message will be sent by the management terminal continuously until the CPE can not receive the detecting message and then sends the NAT ageing time ending message to the management terminal. The CPE calculates the NAT ageing time according to the time period. The management terminal sets the time interval of sending the UDP heartbeat of the CPE according to the situation. The CPE sends the UDP heartbeat within the time interval of sending set by the management terminal. Based on the principle of one-out-one-in and one-out-multiple-in of the NAT, after the management terminal receives the UDP heartbeat, the message sent as a response to the CPE will not be blocked by the NAT. The CPE can transmit the TR-069 Inform or the SNMP Trap according to requirements when the message has been received. When there is a need to manage the CPE immediately, the management terminal sends the UDP management request message to CPE. If the NAT address mapping relation has not become invalid at this time, CPE can give an immediate response after the request has been received,. If it has already become invalid, the management terminal can not receive the response from the CPE or receives an unreachable message to ICMP (Internet Control Message Protocol) port from the NAT gateway. At this time, the management terminal needs resending the UDP management request after the UDP heartbeat of the CPE has been received.

In the embodiments of the method of the present invention, in the process of managing CPE device through the NAT by the management terminal, the operations of setting CPE parameters by the management terminal, discovering the NAT address mapping ageing time, sending the UDP heartbeat and the UDP management request are encrypted in the form of strong encryption and the source addresses of the received messages are verified, which can ensure the security of communication.

The descriptions above are only preferred embodiments of the present invention, which are not considered as a limit to the present invention.

## Claims

1. A method for managing user side device through NAT gateway, comprising the following steps:
Step 1 (401), when the user side device powering on, a management terminal determines whether the user side device is in the LAN side of the NAT gateway or not;
Step 2 (402), the management terminal sets and turns on NAT gateway through function switch of the user side device in the LAN side, and the user side device selects the NAT ageing time discovery operation;
Step 3 (403), the management terminal determines time interval of sending heartbeat message of user datagram protocol of the user side device according to result of the NAT ageing time discovery, and whether the management terminal respond the heartbeat message immediately or not;
Step 4 (404), the user side device transmits the heartbeat message to the management terminal according to the time interval;
Step 5 (405), the management terminal sends UDP management request to the user side device;
Step 6 (406), the user side device associates with the management terminal using the multiple protocol messages according to the management request and the management terminal accomplishes management the initiative to the user side device.

2. The method of claim 1, wherein the ageing time discovery operation comprises the following steps:
Step a (101, 102), the user side device sends ageing time message to the management terminal through port, records the time when the ageing time message is sent, and turns on the port to monitor the response returned from the management terminal;
Step b (103), after receiving the ageing time message, the management terminal sends back a detecting message based on UDP in a predetermined time interval;
Step c (104), if the user side device has not received the detecting message for a set time period, it can be considered that the address mapping relation of the NAT has aged, and the user side device takes the difference between the time when the latest detecting message is received and the sending time as ageing time;
Step d (105), if the ageing time is discovered or can not be discovered for a long time, the user side device sends an ageing discovery ending message to the management terminal, and the management terminal stores the ageing time and stops sending the detecting message according to the ending message or the individual situation of the management terminal.

3. The method of claim 2, wherein in the step d (105),
the individual situation is the management terminal has not received the ending message and automatically stops sending the detecting message after continuously sending the detecting message for 30 minutes.

4. The method of claim 2, wherein the predetermined time interval in the step b (103) is 10 seconds and the set time period in the step c (104) is 5 minutes.

5. The method of claim 1, wherein in the step 1 (401) the management terminal determines whether the user side device is in the LAN side of the NAT gateway by comparing the address reported when the user side device powering on and the message address that is actually received.

6. The method of claim 2, wherein in the step 3 (403) if the ageing time is discovered, the time interval of sending the heartbeat message is set to be smaller than or equal to the ageing time, otherwise the time interval is a default time period.

7. The method of claim 6, wherein in the step 3 (403) if an immediate response to the heartbeat message is set, the management terminal gives an immediate response after receiving the heartbeat message and if the user side device fails to receive the response, the heartbeat message will be resent; if the immediate response is not set, the response will only be sent when the management terminal needs managing the user side device.

8. The method of claim 6, wherein in the step 4 (404) the user side device gets a random number within the scope of the time interval and sends the heartbeat message according to the random number.

9. The method of claim 1, wherein in the step 5 (405) the management terminal sends the management request after receiving the heartbeat message or at any moment when management is needed.

10. The method of claim 1 wherein in the step 6 (406) the multiple protocol messages are SNMP Trap or TR-069 Inform and the heartbeat message is stopped sending during the process of management.

## Patentansprüche

1. Verfahren zum Verwalten eines benutzerseitigen Geräts über einen NAT-Gateway, das die folgenden Schritte aufweist:
1. Schritt (401), wenn das benutzerseitige Gerät eingeschaltet wird, bestimmt ein Verwaltungsendgerät, ob sich das benutzerseitige Gerät an der LAN-Seite des NAT-Gateways befindet oder nicht;
2. Schritt (402), das Verwaltungsendgerät legt den NAT-Gateway fest und aktiviert ihn über einen Funktionsschalter des benutzerseitigen Geräts an der LAN-Seite, und das benutzerseitige Gerät wählt den NAT-Alterungszeit-Erkennungsvorgang;
3. Schritt (403), das Verwaltungsendgerät bestimmt das Zeitintervall des Sendens der Heartbeat-Nachricht des Benutzer-Datagramm-Protokolls der benutzerseitigen Vorrichtung gemäß dem Ergebnis der Erkennung der NAT-Alterungszeit, und ob das Verwaltungsendgerät sofort auf die Heartbeat-Nachricht reagiert oder nicht;
4. Schritt (404), das benutzerseitige Gerät überträgt die Heartbeat-Nachricht an das Verwaltungsendgerät gemäß dem Zeitintervall;
5. Schritt (105), das Verwaltungsendgerät sendet eine UDP-Verwaltungsanforderung an das benutzerseitige Gerät;
6. Schritt (406), das benutzerseitige Gerät verbindet sich mit dem Verwaltungsendgerät mittels mehrerer Protokollnachrichten gemäß der Verwaltungsanforderung und das Verwaltungsendgerät führt die Verwaltung der Initiative des benutzerseitigen Geräts durch.

2. Verfahren nach Anspruch 1, wobei:
der Erkennungsvorgang der Alterungszeit die folgenden Schritte aufweist:
Schritt a (101, 102), die benutzerseitige Vorrichtung sendet eine Alterungszeitnachricht über den Port an das Verwaltungsendgerät, zeichnet die Zeit auf, zu der die Alterungszeitnachricht gesendet wurde, und aktiviert den Port, um die Antwort zu überwachen, die vom Verwaltungsendgerät zurückgesendet wird;
Schritt b (103), nach Empfangen der Alterungszeitnachricht sendet das Verwaltungsendgerät in einem bestimmten Zeitintervall eine Erfassungsnachricht auf der Basis von UDP zurück;
Schritt c (104), wenn das benutzerseitige Gerät die Erfassungsnachricht für eine festgelegte Zeitspanne nicht empfangen hat, kann in Betracht gezogen werden, dass die Adresszuordnungsbeziehung des NAT veraltet ist, und die benutzerseitige Vorrichtung nimmt die Differenz zwischen dem Zeitpunkt, an dem die neueste Erfassungsnachricht empfangen wurde, und der Sendezeit als Alterungszeit;
Schritt d (105), wenn die Alterungszeit erkannt wird oder über lange Zeit nicht erkannt wird, sendet das benutzerseitige Gerät eine Beendigungsnachricht der Alterungserkennung an das Verwaltungsendgerät, das Verwaltungsendgerät speichert die Alterungszeit und beendet das Senden der Erfassungsnachricht gemäß der Beendigungsnachricht oder der individuellen Situation des Verwaltungsendgeräts.

3. Verfahren nach Anspruch 2, wobei im Schritt d (105)
die individuelle Situation ist, dass das Verwaltungsendgerät noch keine Endnachricht erhalten hat und das Senden der Erfassungsnachricht automatisch stoppt, nachdem die Erfassungsnachricht fortlaufend für 30 Minuten gesendet wurde.

4. Verfahren nach Anspruch 2, wobei das in Schritt b (103) bestimmte Zeitintervall 10 Sekunden beträgt und die in Schritt c (104) festgelegte Zeitspanne 5 Minuten beträgt.

5. Verfahren nach Anspruch 1, wobei in Schritt 1 (401) das Verwaltungsendgerät bestimmt, ob das benutzerseitige Endgerät sich an der Lan-Seite des NAT-Gateways befindet, indem die Adresse, die vom benutzerseitigen Gerät beim Anschalten berichtet wurde, und die tatsächlich empfangene Nachrichtenadresse verglichen werden.

6. Verfahren nach Anspruch 2, wobei in Schritt 3 (403), wenn die Alterungszeit erkannt wird, das Zeitintervall des Sendens der Heartbeat-Nachricht auf einen Wert kleiner oder gleich der Alterungszeit festgelegt wird, andernfalls ist das Zeitintervall eine Standardzeitspanne.

7. Verfahren nach Anspruch 6, wobei im 3. Schritt (403), wenn eine sofortige Antwort auf die Heartbeat-Nachricht festgelegt wird, das Verwaltungsendgerät eine sofortige Antwort nach Empfangen der Heartbeat-Nachricht erstellt, und wenn das benutzerseitige Gerät scheitert, die Antwort zu empfangen, die Heartbeat-Nachricht erneut gesendet wird; wenn keine sofortige Antwort festgelegt ist, die Antwort nur gesendet, wenn das Verwaltungsendgerät das benutzerseitige Gerät verwalten muss.

8. Verfahren nach Anspruch 6, wobei im 4. Schritt (404) das benutzerseitige Gerät eine Zufallszahl im Bereich das Zeitintervalls erhält und die Heartbeat-Nachricht gemäß der Zufallszahl sendet.

9. Verfahren nach Anspruch 1, wobei im 5. Schritt (405) das Verwaltungsendgerät die Verwaltungsanforderung nach Empfangen der Heartbeat-Nachricht oder zu einem beliebigen Zeitpunkt sendet, wenn die Verwaltung erforderlich ist.

10. Verfahren nach Anspruch 1, wobei im 6. Schritt (406) mehrere Protokollnachrichten SNMP Trap oder TR-069 Inform sind und das Senden der Heartbeat-Nachricht während des Verwaltungsprozesses gestoppt wird.

## Revendications

1. Procédé pour gérer un dispositif côté utilisateur par l'intermédiaire d'une passerelle NAT, comprenant les étapes suivantes :
Etape 1 (401), lorsque le dispositif côté utilisateur se met sous tension, un terminal de gestion détermine si le dispositif côté utilisateur se trouve du côté LAN de la passerelle NAT ou non ;
Etape 2 (402), le terminal de gestion établit et allume une passerelle NAT par l'intermédiaire d'un commutateur de fonction du dispositif côté utilisateur du côté LAN, et le dispositif côté utilisateur sélectionne l'opération de découverte de temps de vieillissement NAT ;
Etape 3 (403), le terminal de gestion détermine un intervalle de temps d'envoi de message de battement de coeur de protocole de datagramme utilisateur du dispositif côté utilisateur en fonction d'un résultat de la découverte de temps de vieillissement NAT, et si le terminal de gestion répond au message de battement de coeur immédiatement ou non ;
Etape 4 (404), le dispositif côté utilisateur transmet le message de battement de coeur au terminal de gestion en fonction de l'intervalle de temps ;
Etape 5 (405), le terminal de gestion envoie une demande de gestion UDP au dispositif côté utilisateur ;
Etape 6 (406), le dispositif côté utilisateur s'associe au terminal de gestion en utilisant les multiples messages de protocole en fonction de la demande de gestion et le terminal de gestion accomplit la gestion de l'initiative vers le dispositif côté utilisateur.

2. Procédé selon la revendication 1, dans lequel l'opération de découverte de temps de vieillissement comprend les étapes suivantes :
Etape a (101, 102), le dispositif côté utilisateur envoie un message de temps de vieillissement au terminal de gestion par l'intermédiaire d'un port, enregistre l'heure à laquelle le message de temps de vieillissement est envoyé, et allume le port pour surveiller la réponse retournée depuis le terminal de gestion ;
Etape b (103), après la réception du message de temps de vieillissement, le terminal de gestion renvoie un message de détection basé sur UDP dans un intervalle de temps prédéterminé ;
Etape c (104), si le dispositif côté utilisateur n'a pas reçu le message de détection pendant une période de temps établie, il peut être considéré que la relation de mappage d'adresse du NAT a vieilli, et le dispositif côté utilisateur prend la différence entre l'heure à laquelle le dernier message de détection est reçu et l'heure d'envoi en tant que temps de vieillissement ;
Etape d (105), si le temps de vieillissement est découvert ou ne peut pas être découvert pendant longtemps, le dispositif côté utilisateur envoie un message de fin de découverte de vieillissement au terminal de gestion, et le terminal de gestion stocke le temps de vieillissement et arrête d'envoyer le message de détection en fonction du message de fin ou de la situation individuelle du terminal de gestion.

3. Procédé selon la revendication 2, dans lequel à l'étape d (105), la situation individuelle est que le terminal de gestion n'a pas reçu le message de fin et arrête automatiquement d'envoyer le message de détection après avoir envoyé le message de détection en continu pendant 30 minutes.

4. Procédé selon la revendication 2, dans lequel l'intervalle de temps prédéterminé à l'étape b (103) est de 10 secondes et la période de temps établie à l'étape c (104) est de 5 minutes.

5. Procédé selon la revendication 1, dans lequel à l'étape 1 (401) le terminal de gestion détermine si le dispositif côté utilisateur se trouve du côté LAN de la passerelle NAT en comparant l'adresse rapportée lorsque le dispositif côté utilisateur se met sous tension et l'adresse de message qui est réellement reçue.

6. Procédé selon la revendication 2, dans lequel à l'étape 3 (403) si le temps de vieillissement est découvert, l'intervalle de temps d'envoi du message de battement de coeur est établi pour être inférieur ou égal au temps de vieillissement, sinon l'intervalle de temps est une période de temps par défaut.

7. Procédé selon la revendication 6, dans lequel à l'étape 3 (403) si une réponse immédiate au message de battement de coeur est établie, le terminal de gestion donne une réponse immédiate après la réception du message de battement de coeur et si le dispositif côté utilisateur ne parvient pas à recevoir la réponse, le message de battement de coeur sera renvoyé ; si la réponse immédiate n'est pas établie, la réponse ne sera envoyée que lorsque le terminal de gestion aura besoin de gérer le dispositif côté utilisateur.

8. Procédé selon la revendication 6, dans lequel à l'étape 4 (404) le dispositif côté utilisateur obtient un nombre aléatoire dans l'étendue de l'intervalle de temps et envoie le message de battement de coeur en fonction du nombre aléatoire.

9. Procédé selon la revendication 1, dans lequel à l'étape 5 (405) le terminal de gestion envoie la demande de gestion après la réception du message de battement de coeur ou à tout moment lorsque la gestion est nécessaire.

10. Procédé selon la revendication 1, dans lequel à l'étape 6 (406) les multiples messages de protocole sont SNMP Trap ou TR-069 Inform et le message de battement de coeur est arrêté d'être envoyé pendant le processus de gestion.
